# FASCICULE DE BREVET EUROPEEN

(11) **EP 3 033 940 B1**
(45) Date de publication et mention de la délivrance du brevet: **02.08.2017**
(21) Numéro de dépôt: 15198327.7
(22) Date de dépôt: 08.12.2015
(51) Int. Cl.: A01G 25/16, A01G 27/00

(54) **DISPOSITIF D'IRRIGATION AUTONOME, NOTAMMENT POUR PLANTES EN POT**
AUTONOME BEWÄSSERUNGSVORRICHTUNG, INSBESONDERE FÜR TOPFPFLANZEN
AUTONOMOUS WATERING DEVICE, IN PARTICULAR FOR POTTED PLANTS

(30) Priorité: 19.12.2014 FR 1462931
(43) Date de publication de la demande: 22.06.2016
(73) Titulaire: Parrot Drones, 75010 Paris (FR)
(72) Inventeur: PINTO, Guillaume, 75004 Paris (FR); BIHLER, Vincent, 75010 Paris (FR)
(74) Mandataire: Dupuis-Latour, Dominique

(56) Documents cités:
- CN-Y- 201 107 957
- DE-U1-202005 021 093
- JP-B1- 5 167 551
- KR-A- 20110 050 280
- KR-B1- 101 045 740
- US-B1- 8 682 493

## Description

La présente invention concerne d'une façon générale les dispositifs pour irriguer des plantes, notamment des plantes en pot, à partir d'une réserve d'eau.

On connait déjà des accessoires d'irrigation pour plantes en pot, comprenant une embase à piquer dans la terre du pot, et un filetage femelle destiné à recevoir une bouteille du type bouteille jetable en PET, remplie d'eau et retournée. Un dispositif de dosage (conduit de faible section, matière poreuse) permet de doser la quantité d'eau ajoutée à la terre.

Un tel accessoire est par exemple décrit dans le CN 201 107 957 Y.

De tels accessoires sont disponibles dans le commerce depuis de nombreuses décennies. Ils permettent effectivement d'assurer une irrigation lente et de supprimer les opérations d'arrosage manuel. En outre, ils ne demandent aucune création d'un réseau d'irrigation, toujours susceptible de s'obstruer, de fuir ou de se dérégler.

Ils sont toutefois inaptes à assurer que l'apport d'eau est adapté au type de plante, à la taille du pot, à l'atmosphère ambiante, etc.

Dans un autre genre, on connait des appareils "intelligents" comprenant une base effilée apte à être piquée dans la terre du pot et une tête dotée de circuits électroniques. Le produit *Flower Power* commercialisé par la société Parrot SA, Paris, France, permet en particulier de transmettre à distance les besoins en eau d'une plante en pot à partir d'une détermination du taux d'humidité dans la terre. Un tel appareil n'est toutefois pas un accessoire d'irrigation, il nécessite une intervention manuelle régulière pour procéder à l'irrigation proprement dite, selon les prescriptions données par l'appareil.

Le KR 101 045 740 B1 décrit un réseau d'irrigation automatique, où chaque pot est muni d'une vanne montée dans un bloc enfichable dans la terre, la vanne étant reliée à une pompe distante et à un réservoir d'eau commun. Un circuit de contrôle relié à une cellule photoélectrique et à un capteur d'humidité contrôle l'ouverture et la fermeture de la vanne et l'admission de l'eau du réseau de distribution sous pression en fonction des besoins de la plante. Ce système est toutefois relativement complexe, il nécessite l'installation d'un réseau de distribution d'eau et n'est de ce fait pas adapté à l'irrigation d'une plante isolée.

La présente invention vise à perfectionner les dispositifs d'irrigation connus et à proposer un dispositif du type utilisant une bouteille remplie d'eau et retournée, dispositif qui, tout en restant simple et facile à utiliser, soit autonome et capable d'assurer une automatisation du dosage de la distribution d'eau.

Un autre objet de l'invention et de proposer un tel dispositif qui ne nécessite pas de moyen de pompage, et qui puisse donc être alimenté avec une batterie ou pile de très faible capacité pendant une longue durée.

Un autre objet encore de l'invention et de proposer un dispositif qui puisse supporter une réserve d'eau importante en restant stable.

En effet, l'intérêt d'un tel dispositif réside dans la possibilité pour un utilisateur de s'absenter pendant plusieurs jours, voire plusieurs semaines, avec la certitude que tout se passera comme prévu et que la plante sera correctement irriguée.

La stabilité d'un tel dispositif après qu'il a été fiché dans la terre du pot est à cet égard un point essentiel, il ne faudrait pas qu'à la longue le dispositif bascule sur le côté et tombe, notamment après une séquence d'irrigation qui aura eu pour effet d'ameublir la terre. Ce risque est aggravé par le fait que, si l'utilisateur s'absente longtemps, en saison chaude, etc. il aura mis en place une bouteille de grande capacité et l'aura remplie complètement, de sorte que le poids de l'ensemble pourra atteindre 2 kg. Or, du fait de la position surélevée de la bouteille et de son poids, le centre de gravité de l'ensemble accessoire+bouteille+contenu en eau est situé bien au-dessus du niveau de la terre du pot, ce qui rend l'ensemble très instable et accroit le risque de basculement.

L'invention propose à cet effet un dispositif d'irrigation pour plantes du type générique divulgué par le CN 201 107 957 Y précité, c'est-à-dire comprenant, de manière en elle-même connue : un corps principal ; une pointe apte à être fichée dans un substrat pour végétal ; un embout débouchant vers le haut à partir du corps et adapté pour coopérer de façon étanche et amovible avec une ouverture d'une bouteille placée en position retournée formant réservoir d'eau ; et un moyen d'irrigation prévu dans le corps principal, apte à contrôler une circulation d'eau entre l'embout et un passage de sortie d'eau.

De façon caractéristique de l'invention, le dispositif comprend en outre des éléments de détection d'humidité prévus sur la pointe et un circuit de commande d'irrigation relié aux éléments de détection. La pointe comprend une partie en forme de lame généralement plane et pointue, et revêtue localement desdits éléments de détection, un axe de l'embout étant sensiblement aligné avec un axe médian de la partie en forme de lame.

Le moyen d'irrigation comprend une valve d'irrigation commandable en réponse à des consignes du circuit de commande d'irrigation, de manière que l'eau s'écoule de la réserve d'eau pour sortir par le passage de sortie d'eau et chuter dans le substrat.

Selon diverses caractéristiques subsidiaires avantageuses :
- la partie en forme de lame est un circuit imprimé, qui porte notamment le circuit de commande d'irrigation ;
- la pointe comporte un élément de rigidification solidarisé avec la lame sur ses deux faces, le corps principal et l'élément de rigidification définissant notamment ensemble un contour extérieur généralement continu et s'évasant du bas vers le haut ;
- le dispositif comprend en outre un capteur photoélectrique relié au circuit de commande d'irrigation et disposé dans une partie supérieure du corps principal ;
- le passage de sortie d'eau débouche au niveau d'une surface supérieure inclinée du corps principal, au droit d'une extrémité basse en forme de pointe de ladite surface supérieure ;
- l'embout comprend une partie cylindrique en matériau élastomère dimensionnée avec au moins deux diamètres différents pour s'engager avec étanchéité à l'intérieur du goulot d'une bouteille jetable standard et dotée d'un orifice d'entrée d'eau, le passage de sortie d'eau étant notamment disposé au voisinage d'une base dudit embout, la valve possédant une partie d'obturation agencée au moins partiellement à l'intérieur de l'embout ;
- un circuit de communication sans fil pour la réception de paramètres d'irrigation est associé au circuit de commande d'irrigation.

On va maintenant décrire un exemple de mise en oeuvre de l'invention, en référence aux dessins annexés où les mêmes références désignent d'une figure à l'autre des éléments identiques ou fonctionnellement semblables.

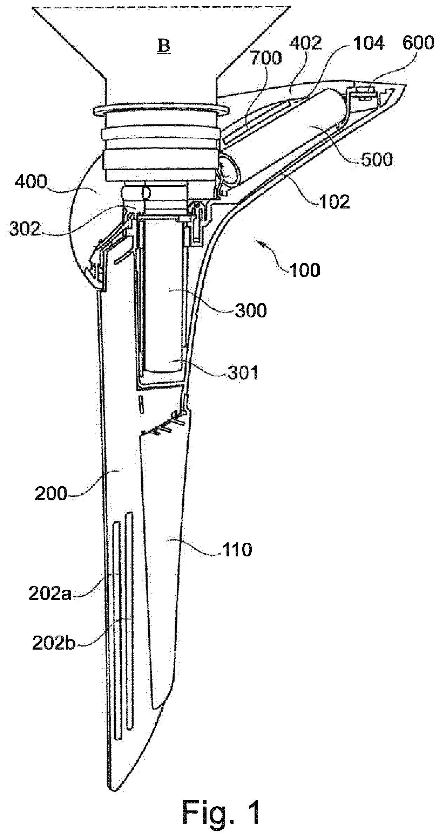

La Figure 1 est en une vue en perspective partiellement arrachée d'un dispositif selon l'invention.

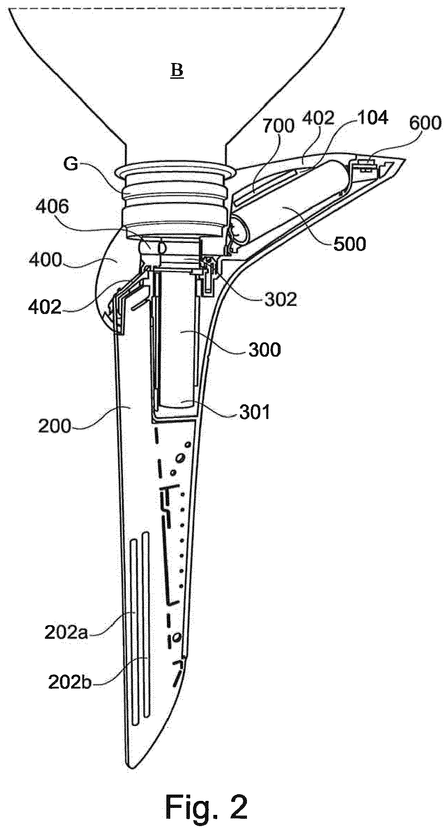

La Figure 2 est une vue en perspective analogue à la Figure 1, une partie étant retirée.

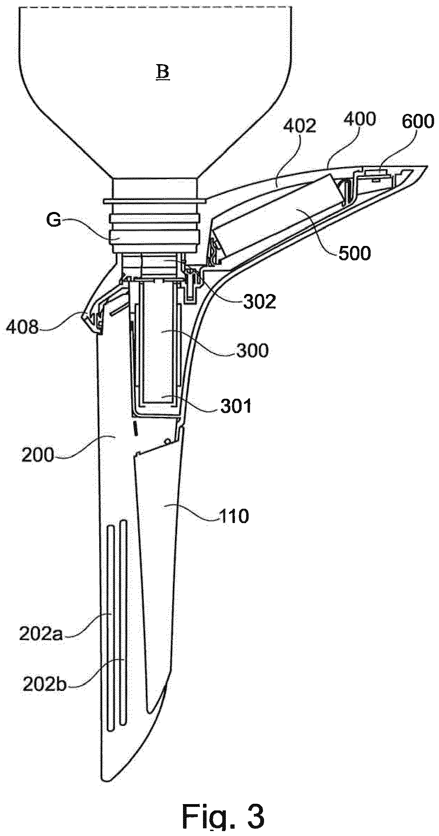

La Figure 3 est une vue en élévation de côté et partiellement en coupe du dispositif.

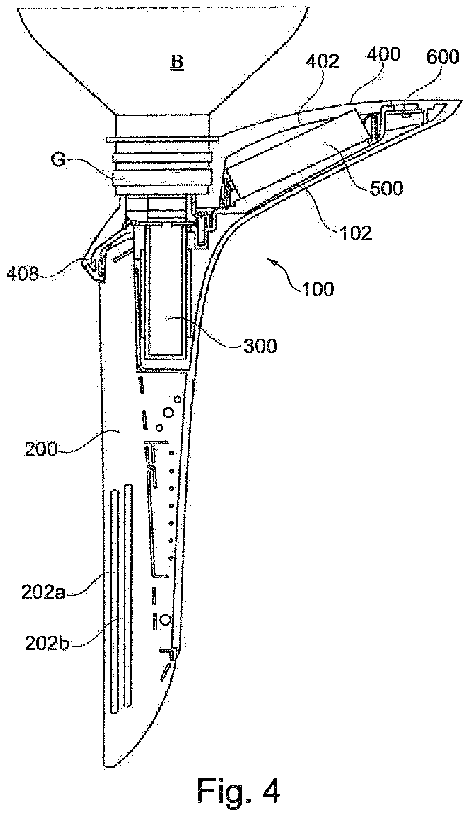

La Figure 4 est une vue en élévation de côté analogue à la Figure 3, une partie étant retirée.
La Figure 5 est une en vue en perspective éclatée du dispositif.

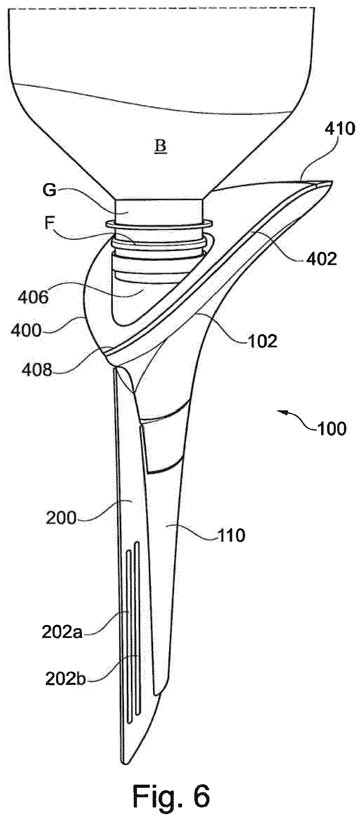

La Figure 6 est une vue en perspective entre face et profil du dispositif, et

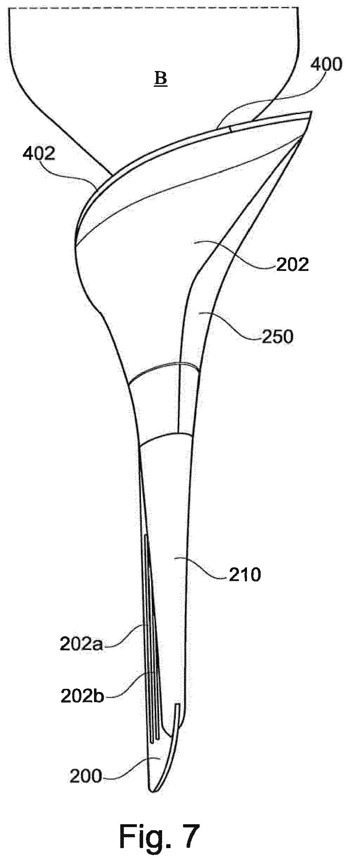

La Figure 7 est une vue en perspective entre profil et arrière du dispositif.

En référence aux dessins, un dispositif d'irrigation automatique selon l'invention comprend un corps principal 100 généralement creux, présentant une paroi incurvée 102 définissant une cavité 104.

Le corps principal présente une face supérieure généralement oblique et inclinée, et sa section horizontale se rétrécit progressivement vers le bas, jusqu'à une région de transition essentiellement continue avec un corps secondaire 110 généralement effilé, de section transversale généralement semi-circulaire et se rétrécissant vers le bas.

Une lame 200 en forme de sabre, d'une épaisseur de 1 à 3 mm par exemple, est solidarisée au corps principal 100 et au corps secondaire 110 par toute technique de fixation appropriée. Cette lame est constituée d'un circuit imprimé comportant des électrodes de mesure, avec deux électrodes externes 202a et 202b utilisées pour mesurer la salinité du milieu ambiant, et une électrode interne incorporée au circuit imprimé (non visible) pour mesurer le taux d'humidité en combinaison avec l'une des deux électrodes externes.

Comme on l'observe sur les figures, le corps secondaire 110 s'étend le long de la lame 200 en étant fixé à elle sur ses deux faces et en emprisonnant son bord arrière, pour ainsi jouer un rôle de renfort mécanique. En variante, on peut réaliser le corps secondaire 110 directement sur la lame 200, par exemple par surmoulage sur les deux faces de celle-ci. Un matériau particulièrement approprié est le *Macromelt* (marque déposée) de la société Henkel, Allemagne.

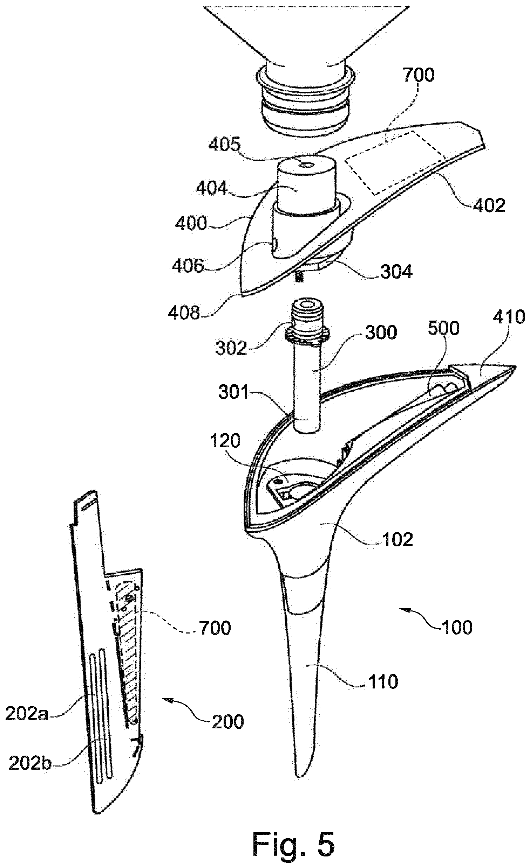

Le corps principal 100 abrite une valve électromagnétique 300 orientée généralement verticalement, une partie supérieure 302 d'un corps de commande 301 coopérant avec une partie d'obturation 304 de type classique en soi (clapet, etc.). On notera, comme le montre la Figure 5, que le corps de commande 301 de la valve 300 est reçu partiellement dans la partie du corps 100 qui fait la transition avec le corps secondaire 110, un joint d'étanchéité 120 étant de préférence autour du corps 301 dans cette région.

Le dessus incurvé et oblique du corps principal 100 est fermé par un capot 400 possédant une paroi principale 402 à partir duquel fait saillie vers le haut, au droit de la valve 300, un embout 404 de raccordement avec un réservoir d'eau. Cet embout 404 est apte à recevoir le goulot G d'une bouteille en PET placée en position retourné, le goulot étant inséré à force dans l'embout 404. Cet embout 404 présente la forme d'un corps généralement cylindrique en matériau élastomère, se rétrécissant légèrement vers le haut, en étant dimensionné avec au moins deux diamètres différents pour s'engager de façon étanche à l'intérieur du goulot d'une bouteille jetable en PET standard, évitant ainsi toute action de vissage.

L'embout 404 en matériau élastomère est réalisé par exemple par surmoulage sur la pièce 400, ou est engagé de façon étanche sur une âme tubulaire (non visible) formée d'un seul tenant avec la pièce 400.

La pièce 400 est fixée sur le corps principal 100 par exemple par soudage périphérique aux ultrasons.

Cet embout comporte à son sommet un orifice 405 d'entrée d'eau, de petite taille, exposée à l'eau contenue dans la bouteille B, et débouchant latéralement au voisinage de sa base, un passage de sortie d'eau 406.

La partie d'obturation 304 de la valve 300 est agencée à l'intérieur de l'embout 400 et est apte à sélectivement autoriser ou interdire le passage de l'eau de l'orifice d'entrée 405 et le passage de sortie 406, par une commande en "tout ou rien" de la valve 300, dont on détaillera la logique dans la suite.

Comme on l'observe sur les figures, l'axe de l'embout 404 de connexion avec la réserve d'eau B est essentiellement aligné avec la lame 200 renforcée par le corps secondaire 110.

Le dispositif comprend en outre une circuiterie électronique de commande 700, une cellule photoélectrique 600 disposée dans la partie supérieure, en forme générale de pointe, du corps principal 100, et une batterie 500.

Pour que la cellule 600 soit exposée à la lumière ambiante, le capot 400 comporte au droit de celle-ci une fenêtre transparente 410.

La circuiterie électronique 700 est montée sur une carte électronique intégrée en tout emplacement souhaité du dispositif. Avantageusement et comme l'illustre la Figure 5, elle est intégrée directement sur la lame 200 réalisée avec la technologie des circuits imprimés, auquel cas le corps secondaire 110 est assemblé à la lame 200 de façon étanche et tient lieu avantageusement de capot de protection pour les composants électroniques. Cette approche facilite la connexion des électrodes 202a, 202b avec la circuiterie électronique, ces éléments étant situés sur le même support constitué par la lame 200.

En variante, cette option étant également illustrée sur la Figure 5, la carte électronique 700 est montée dans un support approprié dans la cavité 104 définie par le corps, par exemple le long de la batterie 500.

La circuiterie électronique 700 est avantageusement dotée d'un circuit de communication sans fil, par exemple au standard Bluetooth, de manière à pouvoir communiquer avec un équipement intelligent distant tel qu'un "smartphone" ou une tablette tactile.

On va maintenant décrire l'utilisation et le fonctionnement du dispositif de l'invention.

Une batterie étant placée dans la cavité 104 du corps principal 100 (accessible par une trappe conventionnelle, non illustrée), le dispositif est monté de façon étanche au niveau de l'embout 404 sur une réserve d'eau constituée ici d'une bouteille en PET dépourvue de son bouchon, préalablement remplie d'eau, éventuellement additionnée d'engrais soluble.

Un petit perçage peut si nécessaire être pratiqué dans la région de la bouteille B située à l'opposé du goulot G pour permettre l'entrée d'air à mesure qu'elle se vide.

L'ensemble étant dans l'orientation illustrée sur les Figures, la partie formée de la lame 200 et du corps secondaire 110 est fichée dans le substrat (terreau, terre, sable, mélanges divers) d'un pot habité par une plante, jusqu'à un niveau situé au voisinage de la transition entre le corps principal 100 et le corps secondaire 110, ou au-dessus de cette transition.

On observera ici que la combinaison entre la forme évasée du corps 100, 110 et le fait que l'axe de l'embout 404 soit aligné avec un axe médian de la lame 200 permet de conférer une excellente stabilité à l'ensemble, même avec une réserve constituée d'une bouteille en PET d'une capacité de 2 litres entièrement remplie.

Le dispositif est alors mis en fonction à l'aide d'un bouton marche arrêt, ou par détection automatique du fichage dans le substrat.

La circuiterie de commande peut être, préalablement ou bien lors de cette mise en route, être programmée à partir d'un "smartphone" ou d'une tablette tactile pour pouvoir délivrer une quantité d'eau adaptée au type de plante, à la taille du pot, etc.

Les circuits de calcul d'irrigation peuvent être du même type que ceux du produit *Flower Power* commercialisé par la société Parrot cité en introduction, qui comprend des capteurs de mesure d'éclairement, d'humidité, de température et de concentration d'engrais, et un processeur pour le traitement des données produites par ces capteurs et pour la détermination des besoins en eau en fonction du type de plante, de sorte que les données exploitées dans le cadre de l'utilisation de ce produit peuvent être avantageusement réutilisées.

Le cycle de commande de l'irrigation est avantageusement basé sur toute combinaison des paramètres suivants :
- l'exposition à la lumière, pouvant par exemple déterminer l'heure de la journée sans recours à une horloge interne ;
- le taux d'humidité dans le substrat, déterminé par les électrodes 202a, 202b reliées au circuit d'estimation d'humidité prévu dans la circuiterie électronique ;
- le type de plante, programmé à distance ;
- la taille du pot, programmée à distance ;
- tous autres paramètres utiles, soit indiqués à distance par le circuit de communication sans fil, soit mesurés directement dans le dispositif (par exemple température ambiante, humidité de l'air ambiant, quantité de matières nutritives dans le substrat, etc.).

Lorsqu'en réponse à la stratégie de commande d'irrigation définie, la vanne 300 est commandée par la circuiterie électronique 700 pour provoquer une irrigation du substrat, l'eau s'écoule à partir de la réserve B, via l'orifice d'entrée 405 et la partie d'obturation 304, pour sortir au niveau du passage 406 et s'écouler, le long du dessus de la paroi 402 jusqu'à son extrémité basse 408 en forme de pointe, pour chuter à partir de là dans le substrat.

Une fermeture de la vanne 300 en réponse à la stratégie de commande interrompt le flux d'eau.

Par ailleurs, on peut prévoir un capteur, par exemple associé au passage de sortie 406, indiquant à la circuiterie de commande que la réserve d'eau B est vide. Cette circuiterie est alors de préférence apte, via le circuit de communication sans fil, à signaler à un *smartphone* ou une tablette de l'utilisateur qu'il faut remplir la réserve.

## Revendications

1. Un dispositif d'irrigation pour plantes, notamment plantes en pot, du type comprenant :
- un corps principal (100, 400) ;
- une pointe (200, 110) apte à être fichée dans un substrat pour végétal ;
- un embout (404) adapté pour coopérer de façon étanche et amovible avec un réservoir d'eau (B) ; et
- un moyen d'irrigation (300) prévu dans le corps principal, apte à contrôler une circulation d'eau entre l'embout (404, 405) et un passage de sortie d'eau (406) ;
- des éléments de détection d'humidité (202a, 202b) prévus sur la pointe ; et
- un circuit de commande d'irrigation (700) relié aux éléments de détection,
le moyen d'irrigation comprenant une valve d'irrigation (300) commandable en réponse à des consignes du circuit de commande d'irrigation, de manière que l'eau s'écoule de la réserve d'eau (B) pour sortir par le passage de sortie d'eau (406) et chuter dans le substrat,
dispositif **caractérisé en ce que** :
- ledit réservoir d'eau est une bouteille placée en position retournée avec une ouverture montée de façon étanche et amovible sur l'embout ; et
- la pointe comprend une partie en forme de lame (200) généralement plane et pointue et revêtue localement desdits éléments de détection (202a, 202b), un axe de l'embout (404) étant sensiblement aligné avec un axe médian de la partie en forme de lame (200).

2. Le dispositif de la revendication 1, dans lequel la partie en forme de lame (200) est un circuit imprimé.

3. Le dispositif de la revendication 2, dans lequel le circuit imprimé (200) porte le circuit de commande d'irrigation (700).

4. Le dispositif de la revendication 1, dans lequel la pointe comporte un élément de rigidification (110) solidarisé avec la lame (200) sur ses deux faces.

5. Le dispositif de la revendication 4, dans lequel le corps principal (100) et l'élément de rigidification (110) définissent ensemble un contour extérieur généralement continu et s'évasant du bas vers le haut.

6. Le dispositif de la revendication 1, comprenant en outre un capteur photoélectrique (600) relié au circuit de commande d'irrigation (700) et disposé dans une partie supérieure du corps principal (100).

7. Le dispositif de la revendication 1, dans lequel le passage de sortie d'eau (406) débouche au niveau d'une surface supérieure inclinée (402) du corps principal, au droit d'une extrémité basse (408) en forme de pointe de ladite surface supérieure.

8. Le dispositif de la revendication 1, dans lequel l'embout (404) comprend une partie cylindrique en matériau élastomère dimensionnée avec au moins deux diamètres différents pour s'engager avec étanchéité à l'intérieur du goulot d'une bouteille jetable standard et dotée d'un orifice d'entrée d'eau (405).

9. Le dispositif de la revendication 8, dans lequel le passage de sortie d'eau (406) est disposé au voisinage d'une base dudit embout (404) et la valve possède une partie d'obturation (304) agencée au moins partiellement à l'intérieur de l'embout.

10. Le dispositif de la revendication 1, dans lequel un circuit de communication sans fil pour la réception de paramètres d'irrigation est associé au circuit de commande d'irrigation.

## Patentansprüche

1. Bewässerungsvorrichtung für Pflanzen, insbesondere Topfpflanzen, des Typs umfassend:
- einen Hauptkörper (100, 400);
- eine Spitze (200, 110), die in ein Substrat für Pflanzen einsteckbar ist;
- einen Stutzen (404), der dafür eingerichtet ist, auf abdichtende und abnehmbare Weise mit einem Wassertank (B) zusammenzuwirken; und
- ein Bewässerungsmittel (300), das in dem Hauptkörper vorgesehen ist und in der Lage ist, eine Zirkulation von Wasser zwischen dem Stutzen (404, 405) und einem Wasserauslasskanal (406) zu überwachen;
- Elemente zur Detektion von Feuchtigkeit (202a, 202b), die an der Spitze vorgesehen sind; und
- eine Bewässerungssteuerschaltung (700), die mit den Detektionsmitteln verbunden ist,
wobei das Bewässerungsmittel ein Bewässerungsventil (300) umfasst, das in Reaktion auf Sollwertvorgaben der Bewässerungssteuerschaltung ansteuerbar ist, so dass das Wasser aus dem Wassertank (B) herausläuft, um über den Wasserauslasskanal (406) auszutreten und in das Substrat hinabzufließen,
wobei die Vorrichtung **dadurch gekennzeichnet ist, dass**
- der Wassertank eine Flasche ist, die in umgekehrter Position platziert ist und eine Öffnung aufweist, die auf abdichtende und abnehmbare Weise an dem Stutzen montiert ist; und
- die Spitze einen Teil in Form einer Zunge (200) umfasst, der im Allgemeinen flach und zugespitzt ist und lokal mit den Detektionselementen (202a, 202b) bedeckt ist, wobei eine Achse des Stutzens (404) im Wesentlichen mit einer Mittelachse des Teils in Form einer Zunge (200) fluchtet.

2. Vorrichtung nach Anspruch 1, wobei der Teil in Form einer Zunge (200) eine gedruckte Schaltung ist.

3. Vorrichtung nach Anspruch 2, wobei die gedruckte Schaltung (200) die Bewässerungssteuerschaltung (700) trägt.

4. Vorrichtung nach Anspruch 1, wobei die Spitze ein Versteifungselement (110) aufweist, das mit der Zunge (200) an deren zwei Seiten fest verbunden ist.

5. Vorrichtung nach Anspruch 4, wobei der Hauptkörper (100) und das Versteifungselement (110) zusammen eine äußere Kontur definieren, die im Allgemeinen durchgängig ist und sich von unten nach oben aufweitet.

6. Vorrichtung nach Anspruch 1, ferner umfassend einen photoelektrischen Sensor (600), der mit der Bewässerungssteuerschaltung (700) verbunden ist und in einem oberen Teil des Hauptkörpers (100) angeordnet ist.

7. Vorrichtung nach Anspruch 1, wobei der Wasserauslasskanal (406) im Bereich einer geneigten oberen Fläche (402) des Hauptkörpers (100) ausmündet, rechtwinklig zu einem spitz ausgebildeten unteren Ende (408) der oberen Fläche.

8. Vorrichtung nach Anspruch 1, wobei der Stutzen (404) einen zylindrischen Teil aus Elastomermaterial umfasst, der mit mindestens zwei unterschiedlichen Durchmessern dimensioniert ist, um abdichtend in das Innere des Halses einer Standardeinwegflasche, die mit einer Wassereinlassöffnung (405) versehen ist, einzutreten.

9. Vorrichtung nach Anspruch 8, wobei der Wasserauslasskanal (406) in der Nähe einer Basis des Stutzens (404) angeordnet ist und das Ventil einen Verschlussteil (304) aufweist, der mindestens teilweise im Inneren des Stutzens vorgesehen ist.

10. Vorrichtung nach Anspruch 1, wobei eine drahtlose Kommunikationsschaltung für den Empfang von Bewässerungsparametern der Bewässerungssteuerschaltung zugeordnet ist.

## Claims

1. An irrigation device for plants, in particular pot plants, of the type comprising:
- a main body (100, 400);
- a tip (200, 110) adapted to be stuck into a plant substrate;
- an end fitting (404) adapted to tightly and removably cooperate with a water tank (B); and
- an irrigation means (300) provided in the main body, adapted to control a circulation of water between the end fitting (404, 405) and a water outlet passage (406);
- humidity detection elements (202a, 202b) provided on the tip; and
- an irrigation control circuit (700) connected to the detection elements,
the irrigation means comprising an irrigation valve (300) controllable in response to instructions from the irrigation control circuit, so that the water flows from the water reserve (B) to go out through the water outlet passage (406) and fall into the substrate,
the device being **characterized in that**:
- said water tank is a bottle placed in an upside-down turned position with an opening tightly and removable mounted on the end fitting; and
- the tip comprises a generally planar and sharp blade-shaped part (200), locally coated with said detection elements (202a, 202b), an axis of the end fitting (404) being substantially aligned with a median axis of the blade-shaped part (200).

2. The device of claim 1, wherein the blade-shaped part (200) is a printed circuit.

3. The device of claim 2, wherein the printed circuit (200) carries the irrigation control circuit (700).

4. The device of claim 1, wherein the tip includes a stiffening element (110) fastened to the blade (200) on the two faces thereof.

5. The device of claim 4, wherein the main body (100) and the stiffening element (110) define together an external contour generally continuous and widening from the bottom to the top.

6. The device of claim 1, further comprising a photoelectric sensor (600) connected to the irrigation control circuit (700) and arranged in an upper part of the main body (100).

7. The device of claim 1, wherein the water outlet passage (406) opens at an inclined upper surface (402) of the main body, vertically aligned with a point-shaped low end (408) of said upper surface.

8. The device of claim 1, wherein the end fitting (404) comprises a cylindrical part made of an elastomeric material, having at least two different diameters to tightly fit into the mouth of a standard disposable bottle and provided with a water inlet orifice (405).

9. The device of claim 8, wherein the water outlet passage (406) is arranged in the vicinity of a base of said end fitting (404) and the valve has a closing part (304) arranged at least partially inside the end fitting.

10. The device of claim 1, wherein a wireless communication circuit for the reception of irrigation parameters is associated with the irrigation control circuit.
